# EUROPÄISCHE PATENTSCHRIFT

(11) **EP 2 864 104 B1**
(45) Veröffentlichungstag und Bekanntmachung des Hinweises auf die Patenterteilung: **26.08.2020**
(21) Anmeldenummer: 13771042.2
(22) Anmeldetag: 24.06.2013
(51) Int. Cl.: B29C 48/365, B29C 48/375, B29C 48/40, B29B 7/48, B29C 48/25, B29C 48/05, F04C 2/16, F04C 2/08

(54) **VERFAHREN ZUR HERSTELLUNG VON KUNSTSTOFFGRANULAT, STRANGPRESSPROFILEN ODER FORMTEILEN**
METHOD FOR PRODUCING POLYMER PELLETS, EXTRUDED PROFILES OR MOULDINGS
PROCÉDÉ POUR LA FABRICATION D'UN GRANULAT DE MATIÈRE PLASTIQUE, DE PROFILÉS FILÉS À LA PRESSE OU DE PIÈCES MOULÉES

(30) Priorität: 25.06.2012 DE 102012012444
(43) Veröffentlichungstag der Anmeldung: 29.04.2015
(73) Patentinhaber: Henke Property UG (Haftungsbeschränkt), 34121 Kassel (DE)
(72) Erfinder: HENKE, Matthias, 34121 Kassel (DE)
(74) Vertreter: Patentanwälte Walther Hinz Bayer PartGmbB
(86) Internationale Anmeldenummer: PCT/DE2013/000327
(87) Internationale Veröffentlichungsnummer: WO 2014/000725

(56) Entgegenhaltungen:
- WO-A1-2007/073009
- DD-A1- 231 029
- DE-A1- 3 815 158
- GB-A- 812 884
- JP-A- S59 164 124
- JP-A- S59 164 124
- US-A- 2 908 226
- US-A- 5 179 521
- US-A- 5 348 453
- US-A1- 2007 109 911

## Beschreibung

Die vorliegende Erfindung betrifft ein Verfahren zur Herstellung von Kunststoffgranulat, Strangpressprofilen oder Formteilen.

Zur Herstellung von Kunststoffteilen wird zunächst in einem Polymerisationsprozess aus verschiedenen Ausgangsstoffen in einer Schneckenmaschine eine Kunststoffschmelze erzeugt. Es versteht sich, dass unter Kunststoffteilen auch derartige Teile zu verstehen sind, die aus Nachwachsenden Rohstoffen wie zum Beispiel aus Eiweiß, hergestellt werden. Eine solche Schneckenmaschine kann ein Compounder, ein Extruder, ein Schneckenkneter oder einer ähnlichen Vorrichtung zur Herstellung einer Kunststoffschmelze sein.

Zum Beispiel aus der EP 0 564 884 A1 ist eine Schneckenmaschine bekannt, in der verschiedene Ausgangsstoffe mittels gleichlaufender Schneckenwellen miteinander vermengt und geknetet werden, bis eine fließfähige Kunststoffschmelze vorliegt.

Zur Herstellung eines Kunststoffgranulates, welches dann zum Beispiel in Kunststoffspritzmaschinen weiterverarbeitet wird, wird die Kunststoffschmelze mit bis zu 30 bar durch ein Werkzeug, hier eine Lochscheibe, gedrückt. Zur Herstellung eines Kunststoffprofils oder eines Kunststoffformteiles muss die Kunststoffschmelze in einem Strangpressverfahren mit bis zu 300 bar durch ein entsprechendes Strangpress- oder Formteil-Werkzeug gepresst werden.

Wie aus der EP 0 564 884 A1 bekannt ist, kann die Kunststoffschmelze von der Schneckenmaschine an eine Zahnradpumpe, wie sie beispielsweise aus der DE-OS 38 42 988, der US 2007/0109911 A1 oder der US 5,179,521 bekannt ist, übergeben werden und von dieser durch das Werkzeug hindurchgedrückt oder gepresst werden, um das gewünschte Granulat, Profil oder Formteil zu erhalten.

Nachteilig an der separaten Zahnradpumpe ist aber, dass diese, unter anderem wegen des eigenen Antriebs und der notwendigen eigenen Steuerung, teuer in der Herstellung ist. Ein weiteres Problem der Zahnradpumpe mit eigenem Antrieb besteht darin, dass insbesondere bei niedrigen Drehzahlen bis 50 U/Min, bauartbedingt eine Pulsation ensteht und somit am Pumpeneintritt ein nicht unerheblicher Vordruck anliegt. Zwar ist die Zahnradpumpe beim Aufeinandertreffen der Zähne benachbarter Zahnräder dicht, jedoch wird bei der Übergabe der Kunststoffschmelze an das Werkzeug nicht sämtliche Kunststoffschmelze durch das Werkzeug hindurchgepresst. Diese zurückbleibende Kunststoffschmelze wird dann von den Zahnrädern zurück zur Pumpeneintrittsöffnung gebracht, wo sich ein entsprechender Vordruck aufbaut. Weil dieser Vordruck aber nicht gleichmäßig, sondern nur in gewissen, pulsartigen Abständen auftritt, liegt eine Pulsation vor. Um diesen pulsartigen Vordruck zu überwinden, muss die Schmelze mit einem entsprechenden Druck übergeben werden, was einen ausreichenden Druckaufbau am Ende der Schneckenmaschine erforderlich macht.

Anstelle der Zahnradpumpe wird häufig auch eine Einschneckenpumpe mit eigenem Antrieb eingesetzt. Aber auch bei der Einschneckenpumpe liegt bauartbedingt am Pumpeneintritt ein nicht unerheblicher Vordruck an, der von der Schneckenmaschine überwunden werden muss.

Somit hat der Einsatz einer Zahnradpumpe oder einer Einschneckenpumpe lediglich den Vorteil, dass die Druckerhöhungseinheit der Schneckenmaschine verkleinert werde kann, aber ein gänzlicher Verzicht auf die Druckerhöhungsmöglichkeit ist nicht möglich, denn der anliegende Vordruck muss noch überwunden werden.

Ein anderer Nachteil der Zahnradpumpe und der Einschneckenpumpe besteht darin, dass nach Beendigung des Einsatzes zwischen den Zahnrädern oder im Schneckengang Kunststoffschmelze zurückbleibt und die Zahnradpumpe bzw. die Einschneckenpumpe aufwendig gereinigt werden muss.

Die EP 0 564 884 A1 lehrt, die Zahnradpumpe in die Schneckenmaschine zu integrieren, so dass ein einziger Antrieb die Schneckenwellen mit der daran angebrachten Zahnradpumpe antreibt. Dies hat den Vorteil, dass die Zahnradpumpe mit der gleichen hohen Drehzahl wie die Schneckenwellen betrieben wird und somit die Pulsation auf ein Minimum reduziert wird.

Aus der EP 1 365 906 B1 ist ein Zweischneckenextruder mit integrierter Schneckenpumpe bekannt, bei dem an die gleichlaufenden Schneckenwellen zwei eine Druckerhöhung bewirkende Schneckenelemente angebracht sind. Aufgrund einer bestimmten Schneckengeometrie bilden sich zwischen den Schneckenelementen Kammern aus, die eine volumetrische Zwangsförderung der Kunststoffschmelze erlauben, so dass ein Druckaufbau erreicht wird. Allerdings ist es dann sowohl bei der Schneckenmaschine gemäß EP 0 564 884 A1, als auch bei dem Zweischneckenextruder gemäß EP 1 365 906 B1 erforderlich, den Antrieb der gesamten Anlage zu vergrößern, weil nun für die Druckerhöhung und für den Misch- und Knetvorgang gleichzeitig Kraft und Energie vom Antrieb bereitgestellt werden muss. Folglich muss ein viel stärkerer Elektromotor und entsprechend verstärkte Getriebe, Wellen, Gehäuse etc. vorgesehen werden.

Bei der Schneckenmaschine gemäß EP 0 564 884 A1 und bei dem Zweischneckenextruder gemäß EP 1 365 906 B1 haben die integrierte Zahnradpumpe und die die Druckerhöhung bewirkenden Schneckenelemente dieselbe Drehzahl, wie die zum Mischen und Kneten eingesetzten Schneckenwellen. Um eine homogene Kunststoffschmelze zu erreichen wird eine hohe Drehzahl benötigt. In der Zahnradpumpe genauso wie bei den die Druckerhöhung bewirkenden Schneckenelementen erzeugt diese hohe Drehzahl aber eine hohe Reibung, die einen hohen Kraft- und Energieaufwand und eine hohe Wärmeentwicklung zur Folge hat. Die Wärme wird dabei an die Kunststoffschmelze abgegeben, was aber zu einer Beeinträchtigung oder im Extremfall auch zu einer Beschädigung der Kunststoffschmelze führen kann. Folglich sind die Anwendungsmöglichkeiten einer integrierten Zahnradpumpe und der speziellen Schneckenelemente begrenzt. Abgemildert wird dieses Problem dadurch, dass je nach eingesetzter Kunststoffschmelze eine individuell angepasste Zahnradpumpe oder individuell ausgebildete Schneckenelemente eingesetzt werden. Auch wirken sich diese Reibungsverluste auf den Antrieb und die gesamte Anlage aus, die entsprechend größer dimensioniert werden muss. Dies führt aber zu einem hohen aparativen Aufwand und zu hohen Rüstkosten.

Dabei liegt der Erfindung die Erkenntnis zugrunde, dass die Einbindung einer Druckerhöhungseinheit in eine Schneckenmaschine nur mit erhöhtem apparativen Aufwand möglich ist und vor allem, dass sowohl bei der Druckerhöhungseinheit, als auch bei der Schneckenmaschine Kompromisse eingegangen werden müssen, so dass keine dieser Komponenten optimal ausgelegt werden kann.

Eine weitere Erkenntnis besteht darin, dass beim Betrieb einer Schneckenmaschine mit Druckerhöhungseinheit zuviel unerwünschte Reibungswärme entsteht, die aufwendig bekämpft werden muss.

Davon ausgehend liegt der vorliegenden Erfindung die Aufgabe zu Grunde, ein Verfahren zur Herstellung von Kunststoffgranulat, Strangpressprofilen oder Formteilen zu schaffen, bei der die Schneckenmaschine ohne eine Druckerhöhungseinheit auskommt.

Dies erfordert aber gleichzeitig, dass eine Druckerhöhungseinheit, hier eine Schmelzepumpe, zu schaffen ist, die die oben genannten Nachteile der Zahnradpumpe oder der Einschneckenpumpe vermeidet, die also insbesondere die Pulsation und den Vordruck auf ein Minimum reduziert.

Im Rahmen der Lösung dieser Aufgabe wurde erkannt, dass eine Zwangsförderung des fließfähigen Mediums bewirkt, dass das Medium permanent von der Eintrittsöffnung der Schmelzepumpe abtransportiert wird mit der Folge, dass an der Eintrittsöffnung kein Vordruck herrscht.

Als technische Lösung dieser Aufgabe wird erfindungsgemäß ein Verfahren zur Herstellung von Kunststoffgranulat, Strangpressprofilen oder Formteilen mit den Merkmalen des Anspruches 1. Vorteilhafte Weiterbildungen dieses Verfarhens sind den jeweiligen Unteransprüchen zu entnehmen.

Bei einem nach dieser technischen Lehre ausgebildetem Verfahren greifen die Förderschnecken, und insbesondere deren Schneckenstege, derart ineinander, dass sich zwischen dem Gehäuse und den Förderschnecken, bzw. deren Schneckenstegen, eine Anzahl von Schneckenkammern ausbilden, in denen eine Zwangsförderung der Kunststoffschmelze erfolgt. Dabei greifen die Schneckenstege der beiden Förderschnecken derart ineinander, dass der an der engsten Stelle verbleibende Schneckenspalt eine Spaltdichtung bildet und gleichzeitig ist das Gehäuse derart ausgebildet, dass der zwischen Gehäuse und den Förderschnecken verbleibende Gehäusespalt ebenfalls eine Spaltdichtung bildet. Diese Spaltdichtung soll derart ausgeführt sein, dass die Kunststoffschmelze im Wesentlichen in der betreffenden Schneckenkammer gehalten wird, ohne dass über die Spaltdichtung ein signifikanter Rückfluss von Kunststoffschmelze in eine benachbarte, rückwärtige Schneckenkammer erfolgt. Somit ist die Schneckenkammer quasi verschlossen. Dies hat den Vorteil, dass die Schneckenkammer hierdurch in axialer Richtung dicht wird, so dass keine Kunststoffschmelze aus der jeweiligen Schneckenkammer herausgelangt.
Auch wenn die Spaltdichtung einerseits den Rückfluss der Kunststoffschmelze verhindern und die Zwangsförderung erhöhen soll, so muss die Spaltdichtung andererseits einen Überdruckausgleich ermöglichen, damit im Falle eines lokal auftretenden Überdruckes eine Beschädigung der Schmelzepumpe und/oder der Kunststoffschmelze verhindert wird. Um alles dies zu Gewährleisten versteht es sich, dass die Spaltdichtung, also der Gehäusespalt und der Schneckenspalt, in Abhängigkeit von der zu verarbeitenden Kunststoffschmelze gewählt werden muss, wobei der Gehäusespalt und der Schneckenspalt zwischen 0,05 mm und 2 mm beträgt. Letztendlich hängt die Spaltbreite und somit die Größe der Spaltdichtung (des Gehäuse- und des Schneckenspaltes), von dem zu verarbeitenden Medium und dessen Zusatzstoffen ab. Bei einem hoch gefüllten Kunststoff mit einem Kalziumkarbonatanteil von 80 % und einem Druck an der Lochscheibe von 500 bar hat sich eine Spaltbreite von 0,5 mm als vorteilhaft erwiesen.

All dies hat den Vorteil, dass durch die Zwangsförderung in Verbindung mit der Spaltdichtung eine im verfahrenstechnischen Sinne abgeschlossene Schneckenkammer entsteht, innerhalb der ein hoher Druckaufbau erreicht wird. Gleichzeitig wird zur nachfolgenden Schneckenkammer ein Druckgefälle möglich, so dass am Werkzeug (an der Lochscheibe) ein sehr hoher Druck zur Verfügung steht, während am Eingang des Verdichters Umgebungsdruck anliegt.

Vorteilhafterweise erstreckt sich eine Schneckenkammer entlang einer Steigung eines Schneckensteges, wobei sich der Anfang und das Ende der Schneckenkammer in der Schnittstelle der beiden Förderschnecken befindet, also in derjenigen Ebene, die durch die Achsen der beiden Förderschnecken definiert ist.

Ein weiterer Vorteil besteht darin, dass die zwei Förderschnecken mit einer vergleichsweise geringen Leistung angetrieben werden können, was zu einem kleineren Antriebsmotor und zu geringerem Energieverbrauch führt.

Noch ein weiterer Vorteil besteht darin, dass hierdurch eine Abdichtung zwischen den Schneckenkammern erreicht wird, die einen hohen Druck in der einzelnen Schneckenkammer und einen Druck von über 400 bar, bis zu 600 bar an der Lochscheibe erlauben.

Noch ein weiterer Vorteil besteht darin, dass aufgrund der Zwangsförderung der Schmelze in der Schmelzepumpe an der Eintrittsöffnung der Schmelzepumpe kein nennenswerter Vordruck anliegt, so dass die Schmelze drucklos von der Schneckenmaschine and die Schmelzepumpe übergehen kann. Einzig die zum Transport der Kunststoffschmelze erforderlichen Kräfte, zum Beispiel zur Überwindung der Trägheit der Schmelze, der Reibung uns so weiter müssen von der Schneckenmaschine aufgebracht werden und können je nach Beschaffenheit der Schmelze zu einer geringen Druckerhöhung führen. Derartige Kräfte können aber von der Schnecke der Schneckenmaschine selbst aufgebracht werden, so dass in der Schneckenmaschine auf eine Druckerhöhungsvorrichtung verzichtet werden kann. Dies wiederum hat den Vorteil, dass eine Schneckenmaschine ohne Druckerhöhungsvorrichtung mit einem kleineren Antrieb, hier einem kleineren Elektromotor, ggf. einem kleineren Getriebe, einer kleineren Schnecke, einem kleineren Gehäuse und andere kleineren Bauteilen betrieben werden kann, da die zu übertragenden Kräfte nun sehr viel geringer sind. Dies führt zu einer deutlichen Reduzierung der Fertigungskosten der Schneckenmaschine. Damit einher geht auch eine Reduzierung der Energiekosten.

Durch den Wegfall der Druckerhöhungsvorrichtung entsteht weiterhin der Vorteil, dass die Schneckenmaschine nun konsequent zum Mischen der Ausgangsstoffe und zur Erzeugung der Kunststoffschmelze hin ausgelegt werden, was den Wirkungsgrad und damit auch die Wirtschaftlichkeit der Schneckenmaschine verbessert.

Ein weiterer Vorteil besteht darin, dass nach der Separierung der Schmelzepumpe von der Schneckenmaschine die Schmelzepumpe einzig zur Erzielung einer effektiven Druckerhöhung konstruiert und ausgelegt werden kann.

Überraschender Weise hat sich beim Bau und Betrieb eines Prototypes der erfindungsgemäßen Vorrichtung herausgestellt, dass die Summe der elektrischen Leistung der Antriebe der Schneckenmaschine und der Schmelzepumpe kleiner war, als die elektrische Leistung einer entsprechenden Vorrichtung gemäß dem Stand der Technik. Somit wurde durch die Trennung von Schneckenmaschine und Schmelzepumpe neben einer Reduzierung der Fertigungskosten der Vorrichtung (aufgrund kleinerer Bauteile) auch eine Reduzierung der Energiekosten zur Herstellung des Kunststoffgranulates, der Strangpressprofile und der Formteile erreicht.

In einer vorteilhaften Ausführungsform sind die Förderschnecken so ausgeführt, dass das Verhältnis von Außendurchmesser zu Kerndurchmesser bei 2 liegt. Je nach Art der Kunststoffschmelze kann auch ein Verhältnis von Dₐ zu Dᵢ zwischen 1,6 und 2,4 gewählt werden. Hierdurch wird bei einer vergleichsweise dünnen und damit kostengünstigen Schnecke ein großes Fördervolumen erreicht.

In einer anderen, vorteilhaften Ausführungsform besitzen die Schneckenstege ein rechteckiges oder trapezförmiges Gewindeprofil. Hierdurch wird eine gute Zwangsförderung der Schmelze erreicht, insbesondere wenn der Flankenwinkel (auch Profilwinkel genannt) zwischen 0° und 20° gewählt wird. Die Gestaltung der Schneckenstege sollte an die einzusetzende Schmelze angepasst werden, so hat sich zum Beispiel bei der Verarbeitung von Polyethylen (PE) ein Profilwinkel von 0° bewährt, während PVC besser bei einem Profilwinkel von 13° zu verarbeiten ist.

In noch einer bevorzugten Ausführungsform weist der Schneckensteg eine plane Oberfläche auf, was ebenfalls zu einer kostengünstigen Fertigung beiträgt.

Aufgrund der Ausbildung des Schneckensteges mit einer planen Flanke, einem Flankenwinkel von 0° und einer planen Oberfläche erhält der Schneckensteg einen rechtwinkeligen Querschnitt. Insbesondere wenn dann der Abstand der Schneckenstege nach jeder Steigung annähernd der Breite des Schneckensteges entspricht, wird ein gleichmäßiger, auf ein Minimum reduzierter Schneckenspalt erreicht, mit dem die entsprechende Schneckenkammer abgedichtet wird. Diese Abdichtung ermöglicht den hohen Druckaufbau and dem Werkzeug, insbesondere an der Lochscheibe.

In einer weiteren, vorteilhaften Ausführungsform sind zwei Förderschnecken übereinander, also vertikal zueinander angeordnet. Dies hat den Vorteil, dass die Eintrittsöffnung mittig gegenüber den Förderschnecken angeordnet werden kann, so dass die ankommende Schmelze von beiden Förderschnecken gut erfasst wird und somit ein hoher Füllgrad erreicht wird. Außerdem hat dies den Vorteil, dass die Eintrittsöffnung seitlich an der Schmelzepumpe angeordnet werden kann, so dass ein radialer Eintritt und ein radialer Austritt des Mediums erfolgt. Dies wiederum erlaubt eine gewinkelte Anordnung der Schmelzepumpe gegenüber der Schneckenmaschine mit dem Vorteil, dass sich die Gesamtlänge der Vorrichtung reduziert. Beispielsweise kann die Schmelzepumpe in einem Winkel von 45° zur Schneckenmaschine aufgestellt werden, was zu einer hohen Platzersparnis führt.

In noch einer weiteren, vorteilhaften Ausführungsform ist die Schmelzepumpe derart ausgelegt, dass die Förderschnecken mit Drehzahlen zwischen 30 U/Min und 300 U/Min, vorzugsweise mit Drehzahlen zwischen 50 U/Min und 150 U/Min rotieren, je nach Art der Kunststoffschmelze. Dies hat den Vorteil, dass die gewählte Drehzahl zumindest in den meisten Fällen oberhalb der Drehzahl einer Zahnradpumpe oder einer Einschneckenpumpe liegt, so dass in Zusammenhang mit der durch die Geometrie bedingten Zwangsförderung der Schmelze diese pulsationslos gefördert wird.

Ein Vorteil der auf maximal 300 U/Min gegrenzten Drehzahl besteht darin, dass die bei hohen Drehzahlen auftretende schädliche Scherung der Polymerketten vermieden wird.

In einer anderen Ausführungsform ist zwischen dem Verdichter und dem vorteilhafterweise elektrischen Antrieb ein Getriebe vorgesehen, über welches die Förderschnecken synchronisiert antreibbar sind. Aufgrund der Synchronisation ist ein wechselseitiges, geometrisch exaktes Ineinandergreifen der Scheckenstege möglich. Vorteilhafter Weise wird die zweite Schnecke dabei nicht wie bei aus dem Stand der Technik bekannten Zahnradpumpen durch eine mechanische Zwangskopplung mitgeschleppt, sondern vielmehr direkt angetrieben, so dass eine hohe Reibung mit den bekannten Nachteilen eines hohen Energieverbrauches und eines damit verbundenen zwangsweisen Temperaturanstieges der Schmelze vermieden wird. Auch ermöglicht dies, die Förderschnecken gegenläufig zu betreiben. Die Synchronisation über das Getriebe hat weiterhin den Vorteil, dass auch Antriebskräfte direkt in beide Förderschnecken eingeleitet werden können, um eine bessere Kraftverteilung zu erreichen.
In einer bevorzugten Ausführungsform erreicht die Schmelzepumpe bei einem Längen-/Durchmesserverhältnis der Förderschnecke von 2 bis 5, vorzugsweise 3,5 einen Druck von mehr als 250 bar, bis zu 600 bar, an der Lochscheibe. Dies hat den Vorteil, dass die Schmelzepumpe kostengünstig hergestellt und Platz sparend eingesetzt werden kann.
Noch ein weiterer Vorteil besteht darin, dass durch das Zusammenwirken der beiden exakt ineinander greifenden Förderschnecken mit den korrespondierend ausgeführten Schneckenstegen einerseits und durch die Zwangsförderung andererseits ein rascher Druckaufbau erfolgt, so dass bei vergleichsweise kurzer Bauweise der Schmelzepumpe hohe Drücke erreicht werden, die Verweildauer in der Schmelzepumpe gering ist und dass dadurch die thermische und mechanisch Schädigung der Schmelze niedrig ist.

Weitere Vorteile der erfindungsgemäßen Schmelzepumpe ergeben sich aus der beigefügten Zeichnung und den nachstehend beschriebenen Ausführungsformen. Die erwähnten Ausführungsformen sind nicht als abschließende Aufzählung zu verstehen, sondern haben vielmehr beispielhaften Charakter. Es zeigen:
- Fig. 1: eine Draufsicht auf eine Vorrichtung in schematischer Darstellung mit einer ersten Ausführungsform einer erfindungsgemäßen Schmelzepumpe;
- Fig. 2: eine im Schnitt dargestellte Seitenansicht der Schmelzepumpe gemäß Fig. 1;
- Fig. 3: eine im Schnitt dargestellte Seitenansicht einer zweiten Ausführungsform einer erfindungsgemäßen Schmelzepumpe, geschnitten entlang Linie III - III in Fig. 5a;
- Fig. 4: eine im Schnitt dargestellt Seitenansicht der Schmelzepumpe gemäß Fig. 3, geschnitten entlang Linie IV - IV in Fig. 5b;
- Fig. 5a/b: eine Schnittdarstellung durch die Schmelzepumpe gemäß Fig. 3, geschnitten entlang Linie V-V in Fig. 3.
- Fig. 6: eine Seitenansicht einer Förderschnecke einer dritten Ausführungsform einer erfindungsgemäßen Schmelzepumpe;
- Fig. 7: eine Frontansicht der Förderschnecke gemäß Fig. 6;
- Fig. 8: eine im Schnitt dargestellt Seitenansicht der Förderschnecke gemäß Fig. 6, geschnitten entlang Linie VIII -VIII in Fig. 6;
- Fig. 8a: eine Detailvergrößerung gemäß Kreislinie VIIIa in Fig. 8;
- Fig. 9: eine perspektivisch dargestellte Ansicht einer Förderschnecke einer vierten Ausführungsform einer erfindungsgemäßen Schmelzepumpe;
- Fig. 10: eine Seitenansicht der Förderschnecke gemäß Fig. 9;
- Fig.11: eine Draufsicht der Förderschnecke gemäß Fig. 9;
- Fig. 12: eine Frontansicht der Förderschnecke gemäß Fig. 9.

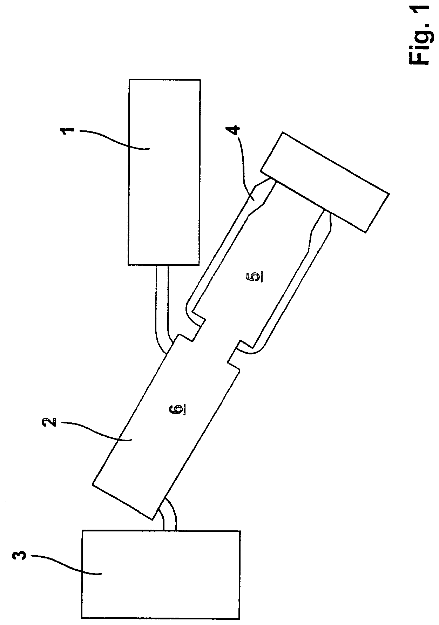

In Fig. 1 ist schematisch eine Vorrichtung zur Herstellung von Kunststoffgranulat, Kunststoffprofilen oder Kunststoffformteilen dargestellt, mit einem Schneckenmaschine 1 zum Mischen und Kneten der Ausgangsmaterialien zu einer Kunststoffschmelze, einer ersten Ausführungsform einer erfindungsgemäßen Schmelzepumpe 2 zum Verdichten der Kunststoffschmelze und einem Werkzeug 3, hier einer Lochscheibe, durch die die auf über 50 bar verdichtete Kunststoffschmelze hindurchgedrückt wird, um das gewünschte Kunststoffgranulat zu erzeugen. In einer hier nicht dargestellten Ausführungsform wird anstelle der Lochscheibe ein Strangpresswerkzeug zur Herstellung der gewünschten Kunststoffprofile oder der gewünschten Kunststoffformteile eingesetzt, wobei am Werkzeug ein Druck von über 250 bar anzulegen ist.

In der hier dargestellten Ausführungsform ist die Schmelzepumpe 45° zur Schneckenmaschine geneigt angeordnet, um den Platzaufwand am Fabrikationsstandort zu reduzieren.

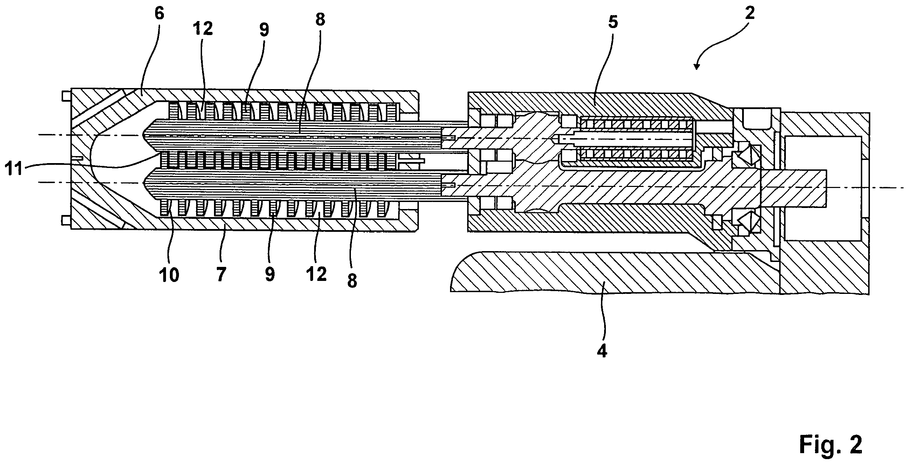

Wie insbesondere Fig. 2 zu entnehmen ist, umfasst die Schmelzepumpe 2 einen Antrieb, hier einen Elektromotor 4, ein Getriebe 5 und einen Verdichter 6. Im Gehäuse 7 des Verdichters 6 sind zwei Förderschnecken 8 parallel zueinander angeordnet gehalten und drehen sich gegenläufig. Die Förderschnecken 8 sind mit dem Getriebe 5 verbunden, welches an den Elektromotor 4 angeschlossen ist. Jede der beiden Förderschnecken 8 besitzt einen im Wesentlichen radial abstehenden, schraubenförmig umlaufenden Schneckensteg 9, wobei der Schneckensteg 9 der einen Förderschnecke 8 in den Schneckensteg 9 der anderen Förderschnecke 8 derart eingreift, dass eine Zwangsförderung der Kunststoffschmelze erfolgt.

In der in Fig. 2 dargestellten ersten Ausführungsform einer erfindungsgemäßen Schmelzepumpe 2 drehen sich die beiden Förderschnecken 8 gegenläufig. Um einen korrekten, wechselseitig exakten Eingriff ineinander zu gewährleisten sind die Förderschnecken 8 über das Getriebe 5 zwangsgekoppelt, sodass ein Gleichlauf der Förderschnecken 8 gewährleistet ist. Dabei werden beide Förderschnecken 8 synchronisert angetrieben.

Das Gehäuse 7 ist derart korrespondierend zu den Förderschnecken 8 geformt, dass zwischen dem äußeren Rand des Schneckensteges 9 und dem Gehäuse 7 ein schmaler Gehäusespalt 10 verbleibt, der zwischen 0,05 mm und 2 mm betragen kann, in der hier dargestellten Ausführungsform 0,5 mm beträgt.

Mit dem radial abstehenden Schneckensteg 9 und einem Flankenwinkel auf jeder Seite des Schneckensteges 9 von Null Grad bei plan ausgeführten Flanken und insbesondere einer plan ausgeführten Stegoberfläche ergibt sich ein im Querschnitt rechteckiger Schneckensteg 9. Gleichzeitig entspricht der Abstand benachbarter Schneckenstege 9 der Breite eines Schneckensteges 9. Daraus ergibt sich, dass der Schneckensteg 9 der einen Förderschnecke 8 passgenau in den Zwischenraum des Schneckensteges 9 der anderen Förderschnecke 8 eingreift. Dabei ist der zwischen den Schneckenstegen 9 und den Förderschnecken 8 verbleibende Schneckenspalt 11 auf ein Minimum reduziert und beträgt zwischen 0,05 mm und 2 mm, vorzugsweise 0,5 mm. Der tatsächlich gewählte Schneckenspalt 11 ist abhängig von dem eingesetzten Medium, wobei der Schneckenspalt 11 bei zunehmender Zähigkeit des Mediums entsprechend größer gewählt ist.

Durch den auf ein Minimum reduzierten Schneckenspalt 11 entsteht eine Dichtung zwischen den benachbarten Förderschnecken 8, so dass sich zwischen dem Gehäuse 4, den Schneckenstegen 9 und den Förderschnecken 8 eine Anzahl von Schneckenkammern 12 ausbilden, wobei aufgrund der Dichtung jede Schneckenkammer 12 abgeschlossen ist und die darin befindliche Kunststoffschmelze kontinuierlich gefördert wird. Durch die dicht aneinander kämmenden Förderschnecken 8 wird ein Rückfluss eines Teiles der Kunststoffschmelze auf ein Minimum reduziert, so dass auch der Druckverlust auf ein Minimum reduziert ist. Dies wird auch als axial dicht bezeichnet.

Um eine hohe Förderleistung zu erreichen sind die Schneckenkammern 12 vergleichsweise groß ausgeführt. Dies wird erreicht durch hohe Schneckenstege 9, wobei das Verhältnis des Außendurchmessers (Da) zum Kerndurchmesser (Dᵢ) zwei beträgt.

Um eine geringe Baugröße der Schmelzepumpe 2 zu realisieren, besitzen die Förderschnecken 8 in der hier dargestellten Ausführungsform ein Längen-/ Außendurchmesserverhältnis von 3,5.

Die innerhalb des Gehäuses 7 ausgebildeten Schneckenkammern 12 sind nach Außen vom Gehäuse 7 und zur Seite vom Schneckensteg 9 begrenzt. In dem Bereich, in dem die Schneckenstege 9 benachbarter Förderschnecken 8 ineinander greifen sind die Schneckenkammern 12 durch die Dichtwirkung voneinander getrennt. Folglich erstreckt sich eine Schneckenkammer 12 über einen Schneckengang.

Die Ausgestaltung der Breite des Gehäuse- 10 und/oder Schneckenspaltes 11 hängt von den verwendeten Materialien ab. So hat sich beispielsweise bei der Verarbeitung von hochgefüllten Kunststoffen mit einem Kalziumkarbonatanteil von 80 % bei einem benötigten Druck von 250 bar eine Breite von 0,5 mm bewährt. Bei einem Medium mit einer höheren Fließfähigkeit wird der Spalt kleiner gehalten, bei einem Medium mit einer geringeren Fließfähigkeit wird der Spalt größer ausgeführt. Für den Fall, dass im Medium harte Partikel, Fasern oder Pigmente untergemischt sind, kann der Spalt ebenfalls größer ausgeführt sein.

Dabei ermöglicht der Gehäuse- 10 und der Schneckenspalt 11 die Ausbildung der in sich quasi geschlossenen Schneckenkammern 12, wodurch ein Druckaufbau hin zur Lochscheibe 3 erreicht wird, unter anderem, weil hierdurch ein signifikanter Rückfluss des Mediums verhindert wird.

Für den Fall, dass der Druck lokal einmal über das gewünschte Maß hinaus steigt, so wirkt der Spalt ausgleichend, denn dann kann etwas Kunststoffschmelze in die benachbarte Schneckenkammer 12 entweichen, was lokal den Druck wieder senkt und Verstopfungen und/oder Beschädigungen vermeidet. Somit hat die Größe des Spaltes auch Einfluss auf den Druckausgleich.

Ist ein höherer Druck am Werkzeug 3 gewünscht, so müssen der Gehäusespalt 10 und der Schneckenspalt 11 verringert werden. Das gilt auch für den Fall, dass eine hochviskosere Kunststoffschmelze verarbeitet wird. Bei einer niedrigviskosen Kunststoffschmelze kann der Spalt auch verbreitert werden. Im Ergebnis ist der Spalt entsprechend der hier genannten Kriterien für jeden Einzelfall auszuwählen. Dabei hat sich eine Spaltbreite zwischen 0,05 mm und 2 mm bewährt. Alle hier genannten Ausführungsformen sind axial dicht.

Die hier beschriebenen Ausführungsformen der Schmelzepumpe 2 mit einer Spaltbreite von 0,5 mm sind besonders vorteilhaft einsetzbar für hochgefüllte Kunststoffe, das heißt für Kunststoffe mit einem hohen Feststoffanteil, wie zum Beispiel Kalziumkarbonat, Holz oder Carbide. Dabei besitzt der hochgefüllte Kunststoff einen Kalziumkarbonatanteil von mindestens 80 %.

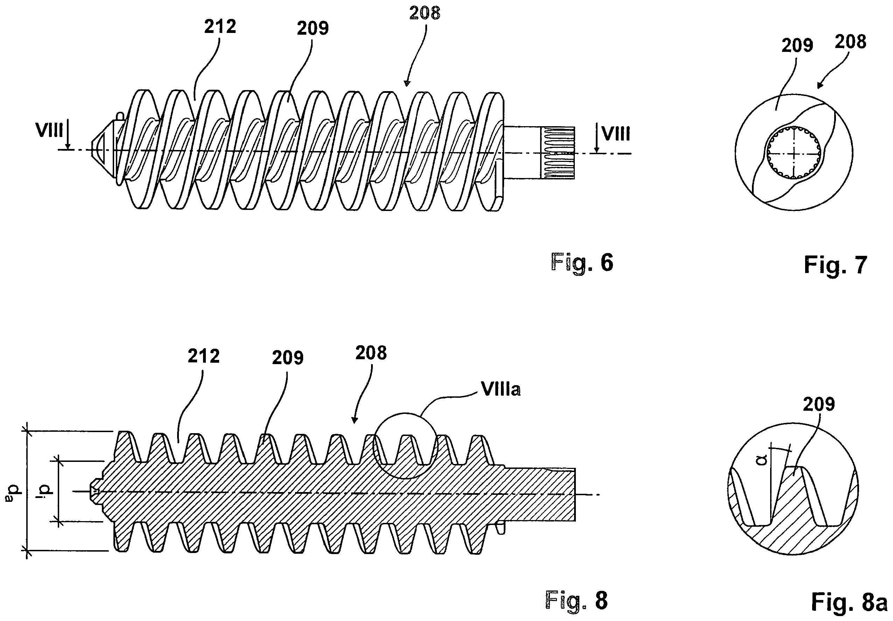

Auf Grund der Vielzahl von Kunststoffschmelzen können die Flankenwinkel (auch Profilwinkel genannt) in jeder notwendigen Form angepasst werden. Dabei hat es sich als vorteilhaft erwiesen, zumindest bei gegenläufigen Förderschnecken 8 ein rechteckiges Gewindeprofil wie in Fig. 2 gezeigt oder ein wie in Fig. 8 dargestellt trapezförmiges Gewindeprofil zu wählen.

Rechteckige Gewindeprofile, wie in Fig. 2 dargestellt werden auch zur Verarbeitung von Polyethylen (PE) eingesetzt.

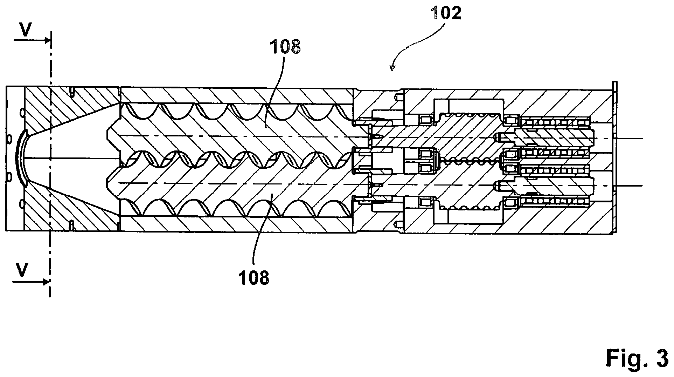

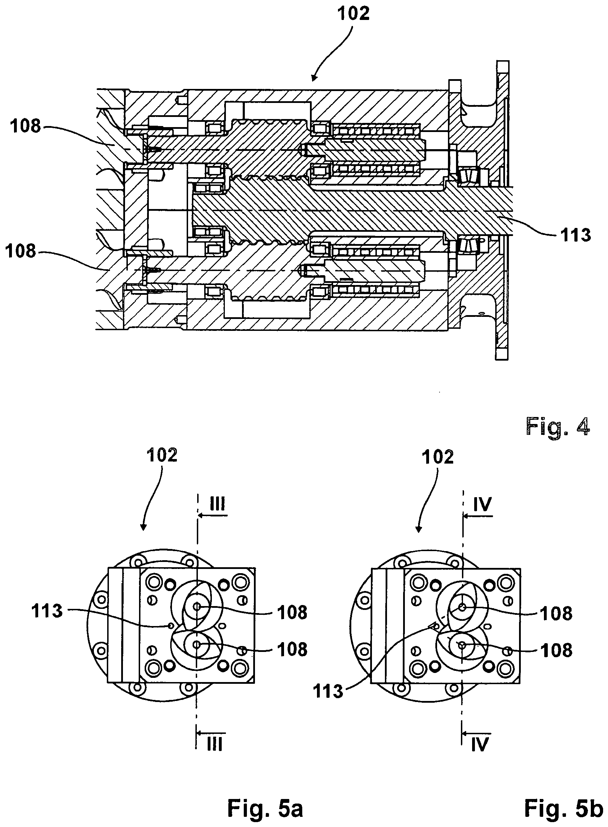

In der in den Fig. 3 - 5 dargestellten zweiten Ausführungsform einer erfindungsgemäßen Schmelzepumpe 102 drehen sich die beiden Förderschnecken 108 gleichläufig und werden von einer gemeinsamen Antriebswelle 113 angetrieben. Auch hier greifen die Schneckenstege der Förderschnecken 108 derart ineinander, dass ein minimaler Schneckenspalt verbleibt.

Derartige, hochgefüllte Kunststoffe können mit der Schmelzepumpe 2, 102 material schonend transportiert und verdichtet werden, wobei der Kunststoff bei Umgebungsdruck in die Schmelzepumpe 102 eintritt und mit einem Druck von 50 bar bis zu 600 bar, vorzugsweise 400 bar die Schmelzepumpe 102 wieder verlässt. Auch hier ist das Verhältnis von Dₐ zu Dᵢ gleich 2, um eine hohe Förderleistung zu erzielen.

In den Fig. 6 - 8 ist eine Förderschnecke 208 einer dritten Ausführungsform einer erfindungsgemäßen Schmelzepumpe dargestellt. Diese Förderschnecke 208 ist zweigängig ausgeführt und ihre Schneckenstege 209 sind im Querschnitt trapezförmig mit einem Flankenwinkel von 13° ausgeführt. Diese Förderschnecke 208 wird gegenläufig eingesetzt und wird bevorzugt zur Verarbeitung von PVC verwendet. Auch hier bilden sich axial dichte Schneckenkammern 212, die einen guten Druckaufbau und eine gute Zwangsförderung erreichen. Auch hier ist Verhältnis von Dₐ zu Dᵢ gleich 2.

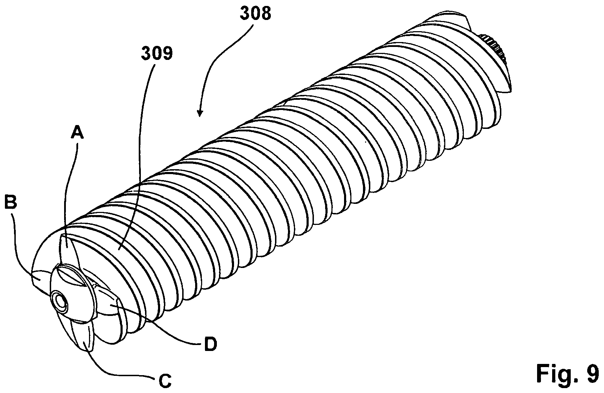

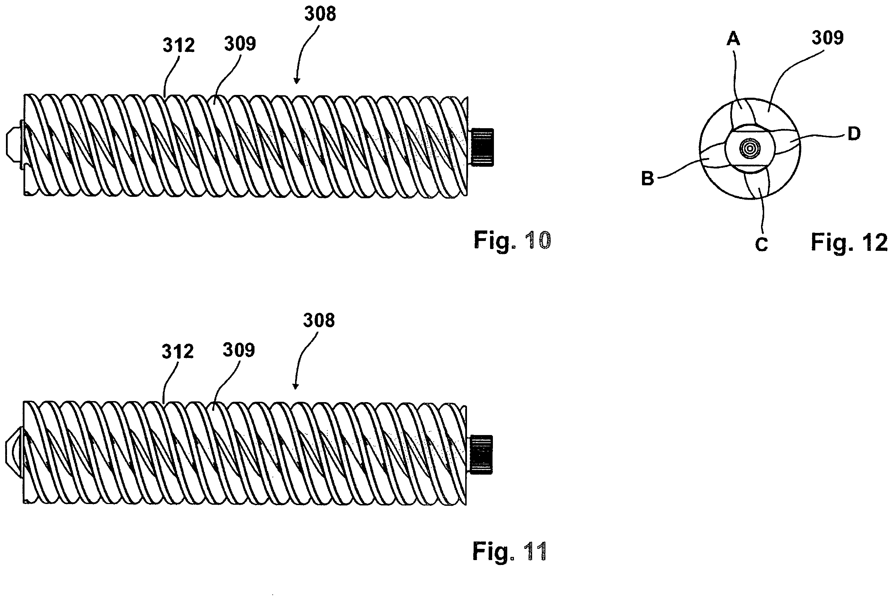

In den Fig. 9 -12 ist eine Förderschnecke 308 einer vierten Ausführungsform einer erfindungsgemäßen Schmelzepumpe dargestellt. Diese Förderschnecke 308 ist viergängig (A, B, C, D) ausgeführt und ihre Schneckenstege 309 sind im Querschnitt rechteckig mit einem Flankenwinkel von 0° ausgeführt. Diese Förderschnecke 308 wird gegenläufig eingesetzt und wird bevorzugt zur Verarbeitung eines eiweißhaltigen Mediums verwendet. Auch hier bilden sich axial dichte Schneckenkammern 312, die einen guten Druckaufbau und eine gute Zwangsförderung erreichen. Auch hier ist das Verhältnis von Da zu Di gleich 2.

## Patentansprüche

1. Verfahren zur Herstellung von Kunststoffgranulat, Strangpressprofilen oder Formteilen, mit Verfahrensschritt a) Erzeugen einer Kunststoffschmelze mittels einer Schneckenmaschine (1) und Verfahrensschritt b) Durchdrücken der Kunststoffschmelze mittels einer Schmelzepumpe (2) durch ein Werkzeug (3) zur Schaffung des Granulates, des Strangpressprofils oder des Formteiles, wobei die Schmelzepumpe (2) losgelöst von der Schneckenmaschine (1) ausgebildet ist und einen eigenen Antrieb (4) aufweist,
wobei die Schmelzepumpe (2) einen Verdichter (6) aufweist und wobei der Verdichter (6), eine Eintritts- und eine Austrittsöffnung umfasst,
**dadurch gekennzeichnet,**
**dass** der Verdichter (6) mindestens zwei, in einem gemeinsamen Gehäuse (7) angeordnete, Förderschnecken (8, 108, 208, 302) umfasst, dass an der Förderschnecke (8, 108, 208, 308) vorgesehene Schneckenstege (9, 209, 309) derart ausgebildet sind, dass eine Zwangsförderung des Mediums erfolgt, und wobei die Förderschnecken (8, 108, 208, 308) von dem eigenen Antrieb (4) der Schmelzepumpe (2) angetrieben werden,
**dass** die Schneckenstege (9, 209, 309) und die Förderschnecken (8, 108, 208, 308) derart korrespondierend zueinander
ausgebildet und ineinander greifend angeordnet sind, dass sich zwischen dem Gehäuse (4) und den Schneckenstegen (9, 209, 309) der Förderschnecken (8,108, 208, 308) mindestens eine Schneckenkammer (12, 212, 312) ausbildet, die bis auf einen Gehäusespalt (10) und/oder einen Schneckenspalt (11) abgeschlossen ist,
**dass** der Gehäusespalt (10) und der Schneckenspalt (11) so gewählt ist, dass der Verdichter (6) als axial dicht gilt,
**dass** das Gehäuse (7) korrespondierend zur Außenkontur der Förderschnecken (8, 108, 208, 209) derart ausgebildet ist, dass der zwischen der Förderschnecke (8, 108 208, 308) und dem Gehäuse (7) verbleibende Gehäusespalt (10) (10)
in Abhängigkeit von der Kunststoffschmelze zwischen 0,05 mm und 2 mm beträgt,
**dass** die Schneckenstege (9) und die Förderschnecken (8, 108, 208, 308) derart korrespondierend zueinander ausgebildet und ineinander greifend angeordnet sind, dass der zwischen dem Schneckensteg (9, 209, 309) und der Förderschnecke (8, 108, 208, 308) verbleibende Schneckenspalt (11) in Abhängigkeit von der Kunststoffschmelze zwischen 0,05 mm und 2 mm beträgt,
und **dass** zwischen Verfahrensschritt a) und Verfahrensschritt b) in Verfahrensschritt a1) die Kunststoffschmelze drucklos von der Schneckenmaschine (1) an die Schmelzepumpe (2) übergeben wird.

2. Verfahren nach Anspruch 1,
**dadurch gekennzeichnet,**
**dass** die Schmelzepumpe (2) gegenüber der Schneckenmaschine (1) in einem Winkel zwischen 15° und 75°, insbesondere zwischen 30° und 60°, vorzugsweise von 45° angeordnet ist.

3. Verfahren nach einem der vorangehenden Ansprüche,
**dadurch gekennzeichnet,**
**dass** die Förderschnecke (8, 108, 208, 308) derart ausgebildet ist, dass das Verhältnis von Außendurchmesser (Dₐ) zu Kerndurchmesser (Dᵢ) zwischen 1,6 und 2,4, vorzugsweise bei 2,0, beträgt

4. Verfahren nach einem der vorangehenden Ansprüche, **dadurch gekennzeichnet,**
**dass** die Schneckenstege (9, 209, 309) ein rechteckiges oder trapezförmiges Gewindeprofil aufweisen.

5. Verfahren nach Anspruch 4,
**dadurch gekennzeichnet,**
**dass** der Schneckensteg (9, 209, 309) einen Profilwinkel zwischen 0° und 20° aufweist.

6. Verfahren nach einem der vorangehenden Ansprüche,
**dadurch gekennzeichnet,**
**dass** zwei Förderschnecken (8) übereinander, also vertikal, angeordnet sind.

7. Verfahren nach einem der vorangehenden Ansprüche,
**dadurch gekennzeichnet,**
**dass** der Antrieb (4) und das Getriebe (5) für eine Drehzahl der Förderschnecken (8, 108, 208, 308) zwischen 30 U/Min und 300 U/Min, vorzugsweise zwischen 50 U/Min und 150 U/Min ausgelegt sind.

8. Verfahren nach einem der vorangehenden Ansprüche,
**dadurch gekennzeichnet,**
**dass** zwischen dem Antrieb (4) und dem Verdichter (6) ein Getriebe (5) vorgesehen ist, über welches die Förderschnecken (8, 108) synchronisiert antreibbar sind.

9. Verfahren nach einem der vorangehenden Ansprüche,
**dadurch gekennzeichnet,**
**dass** die Förderschnecken (8, 208, 308) gegenläufig ausgebildet sind.

10. Verfahren nach einem der vorangehenden Ansprüche,
**dadurch gekennzeichnet,**
**dass** die Förderschnecke (8, 108, 208, 308) ein Längen-/Außendurchmesserverhältnis von 2 bis 5, vorzugsweise von 3,5 aufweist.

## Claims

1. A method for manufacturing synthetic granules, extruded profiles or molded parts, with step a) producing a synthetic melt using worm machine (1) and step b) pressing the synthetic melt using a melt pump (2) through a tool (3) for creating the granules, the extruded profile or the molded part, wherein the melt pump (2) is designed to be detached from worm machine (1) and has a distinct drive (4), whereas the melt pump (2) comprises a compressor and whereas the compressor (6) comprises an inlet and an outlet opening,
**characterized in that**
the compressor (6) comprises at least two worm conveyors (8, 108, 208, 308) disposed in a common housing (7),
whereas the worm conveyor (8, 108, 208, 308) provides the worm flights (9, 209, 309) configured in such a manner that a force feed of the synthetic melt occurs and whereas the worm conveyors (8, 108, 208, 308) are drivable by the melt pumps (2) own drive (4),
that the worm flights (9, 209, 309) and the worm conveyors (8, 108, 208, 308) are configured so that they correspond to each other and engage with each other in such a manner that between the housing (4) and the worm flights (9, 209, 309) of the worm conveyors (8, 108, 208, 308) at least one worm chamber (12, 212, 312) is formed, which is closed except for a housing gap (10) and/or a worm gap (11),
that the housing gap (10) and the screw gap (11) is chosen depending on the synthetic melt in such a manner that the compressor (6) is axially sealed,
that the housing (7) is configured so that it corresponds to the outer contour of the worm conveyors (8, 108, 208, 209) in such a manner that the housing gap (10) remaining between the worm conveyor (8, 108, 208, 308) and the housing (7) depending on the synthetic melt is between 0,05 mm and 2 mm,
that the worm flights (9) and the worm conveyors (8, 108, 208, 308) are formed so that they correspond to each other and disposed so that they engage with each other in such a manner that the worm gap (11) remaining between the worm flight (9, 209, 309) and the worm conveyor (8, 108, 208, 308) depending on the synthetic melt is between 0,05 mm and 2 mm,
and that between step a) and step b) in step a1) the synthetic melt is transferred from the worm machine (1) to the melt pump (2) at atmospheric pressure.

2. Methodaccording to claim 1,
**characterized in that**
the melt pump (2) is disposed at an angle between 15° and 75°, more specifically between 30° and 60°, preferably of 45° relative to the screw or worm machine (1).

3. Methodaccording to one of the preceeding claims,
**characterized in that**
the worm conveyor (8, 108, 208, 308) is configured in such a manner that the ratio between the outward diameter (Dₐ) and the core diameter (Dᵢ) amounts to between 1.6 and 2.4, preferably to 2.0.

4. Method according to one of the preceeding claims,
**characterized in that**
the worm flight (9, 209, 309) has a rectangular or trapeze-shaped thread profile.

5. Method according to claim 4,
**characterized in that**
the worm flight (9, 209, 309) has a profile angle () between 0° and 20°.

6. Method according to one of the preceeding claims ,
**characterized in that**
two worm conveyors (8) are disposed above one another, i.e. vertically.

7. Method according to one of the preceeding claims ,
**characterized in that**
the drive (4) and the gear (5) are designed for a rotation speed of the worm conveyors (8, 108, 208, 308) between 30 rpm and 300 rpm, preferably between 50 rpm and 150 rpm.

8. Method according to one of the preceeding claims ,
**characterized in that**
a gear (5) is provided between the drive (4) and the compressor (6), by way of which the worm conveyors (8, 108) are synchronously drivable.

9. Method according to one of the preceeding claims,
**characterized in that**
the worm screws (8, 208, 308) are configured to rotate in opposite directions.

10. Method according to one of the preceeding claims,
**characterized in that**
the worm conveyor (8, 108, 208, 308) has a length/outer diameter ratio of 2 to 5, preferably of 3.5.

## Revendications

1. Procédé de production de granulés de plastique, de profilés extrudés ou de pièces moulées, avec une étape de procédé a) qui consiste à produire une matière synthétique en fusion au moyen d'une machine à vis (1) et une étape de procédé b) qui consiste à forcer la matière synthétique en fusion au moyen d'une pompe de matière en fusion (2) à travers un outil (3) pour créer les granulés, le profilé extrudé ou la pièce moulée, où la pompe de matière en fusion (2) est conçue de manière détachée de la machine à vis (1) et comporte son propre entraînement (4),
où la pompe de matière en fusion (2) comporte un compresseur (6) et où le compresseur (6) comprend une ouverture d'entrée et une ouverture de sortie,
**caractérisé en ce que**
le compresseur (6) comprend au moins deux vis transporteuses (8, 108, 208, 302) disposées dans un boîtier commun (7),
**en ce que** les filets de vis (9, 209, 309) prévus sur la vis transporteuse (8, 108, 208, 308) sont conçus de telle manière que le fluide est transporté de manière forcée, et où les vis transporteuses (8, 108, 208, 308) sont entraînées par l'entraînement propre (4) de la pompe de matière en fusion (2),
**en ce que** les filets de vis (9, 209, 309) et les vis de transport (8, 108, 208, 308) sont conçus pour se correspondre et sont disposés de manière à s'engager les uns dans les autres de telle sorte qu'au moins une chambre de vis (12, 212, 312) est formée entre le boîtier (4) et les filets de vis (9, 209, 309) des vis transporteuses (8, 108, 208, 308), laquelle chambre est fermée à l'exception d'une fente de boîtier (10) et/ou d'une fente de vis (11),
**en ce que** la fente de boîtier (10) et la fente de vis (11) sont choisies de telle manière que le compresseur (6) est considéré comme étanche axialement,
**en ce que** le boîtier (7) est conçu pour correspondre au contour extérieur des vis transporteuses (8, 108, 208, 209) de telle sorte que la fente de boîtier (10) restant entre la vis transporteuse (8, 108, 208, 308) et le boîtier (7) est compris entre 0,05 mm et 2 mm, en fonction de la matière plastique fondue,
**en ce que** les filets de vis (9) et les vis transporteuses (8, 108, 208, 308) sont conçus pour se correspondre et sont disposés de manière à s'engager l'un dans l'autre de telle sorte que la fente de vis (11) restant entre le filet de vis (9, 209, 309) et la vis transporteuse (8, 108, 208, 308) est compris entre 0,05 mm et 2 mm, et
ence qu'entre l'étape a) et l'étape b) du processus, à l'étape a1), la matière synthétique en fusion est transférée sans pression de la machine à vis (1) à la pompe de matière en fusion (2).

2. Procédé selon la revendication 1,
**caractérisé en ce que**
la pompe de matière en fusion (2) est disposée en face de la machine à vis (1) sous un angle compris entre 15° et 75°, en particulier entre 30° et 60°, de préférence de 45°.

3. Procédé selon l'une des revendications précédentes,
**caractérisé en ce que**
la vis transporteuse (8, 108, 208, 308) est conçue de telle manière que le rapport du diamètre extérieur (Da) au diamètre du noyau (Di) est compris entre 1,6 et 2,4, de préférence 2,0.

4. Procédé selon l'une des revendications précédentes,
**caractérisé en ce que**
les filets de vis (9, 209, 309) ont un profil de filetage rectangulaire ou trapézoïdal.

5. Procédé selon la revendication 4,
**caractérisé en ce que**
le filet de vis (9, 209, 309) présente un angle de profil compris entre 0° et 20°.

6. Procédé selon l'une des revendications précédentes,
**caractérisé en ce que**
deux vis transporteuses (8) sont disposées l'une au-dessus de l'autre, c'est-à-dire verticalement.

7. Procédé selon l'une des revendications précédentes,
**caractérisé en ce que**
l'entraînement (4) et la transmission (5) sont conçus pour une vitesse de rotation des vis transporteuses (8, 108, 208, 308) comprise entre 30 tr/min et 300 tr/min, de préférence entre 50 tr/min et 150 tr/min.

8. Procédé selon l'une des revendications précédentes,
caractérisé en ce en ce qu'une transmission (5) est prévue entre l'entraînement (4) et le compresseur (6), par laquelle les vis transporteuses (8, 108) peuvent être entraînées de manière synchronisée.

9. Procédé selon l'une des revendications précédentes,
**caractérisé en ce que**
les vis transporteuses (8, 208, 308) sont conçues pour fonctionner dans des directions opposées.

10. Procédé selon l'une des revendications précédentes,
**caractérisé en ce que**
la vis transporteuse (8, 108, 208, 308) présente un rapport longueur/diamètre extérieur de 2 à 5, de préférence 3,5.
